(19) **Europäisches Patentamt / European Patent Office / Office européen des brevets**

(11) **EP 4 127 683 B1**

(12) **FASCICULE DE BREVET EUROPEEN**

(45) Date de publication et mention de la délivrance du brevet:
**22.11.2023 Bulletin 2023/47**

(21) Numéro de dépôt: **21713971.6**

(22) Date de dépôt: **25.03.2021**

(51) Classification Internationale des Brevets (IPC):
**G01N 21/85** *(2006.01)* **G01N 21/31** *(2006.01)*
**G01N 21/35** *(2014.01)* **G01N 21/3504** *(2014.01)*

(52) Classification Coopérative des Brevets (CPC):
**G01N 21/3504; G01N 21/85;** G01N 2021/3133;
G01N 2021/8578; G01N 2201/0214

(86) Numéro de dépôt international:
**PCT/EP2021/057765**

(87) Numéro de publication internationale:
**WO 2021/191360 (30.09.2021 Gazette 2021/39)**

(54) **DRONE DE MESURE DE DONNÉES REPRÉSENTATIVES DE TENEURS EN AU MOINS DEUX GAZ PRÉSENTS DANS L'ATMOSPHÈRE À L'ÉCART DU SOL ET PROCÉDÉ DE MESURE ASSOCIÉ**

DROHNE ZUR MESSUNG VON DATEN, DIE FÜR DEN INHALT VON MINDESTENS ZWEI GASEN IN DER ATMOSPHÄRE IM ABSTAND VOM BODEN REPRÄSENTATIV SIND, UND ENTSPRECHENDES MESSVERFAHREN

DRONE FOR MEASURING DATA REPRESENTATIVE OF THE CONTENT OF AT LEAST TWO GASES PRESENT IN THE ATMOSPHERE AWAY FROM THE GROUND AND ASSOCIATED MEASUREMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2020 FR 2003027**

(43) Date de publication de la demande:
**08.02.2023 Bulletin 2023/06**

(60) Demande divisionnaire:
**23168857.3 / 4 235 150**

(73) Titulaires:
- **TotalEnergies OneTech**
  **92400 Courbevoie (FR)**
- **Centre national de la recherche scientifique**
  **75016 Paris (FR)**
- **Université De Reims Champagne-Ardenne**
  **51097 Reims Cedex (FR)**

(72) Inventeurs:
- **DONNAT, Ludovic**
  **73290 La Motte Servolex (FR)**
- **MAUNOURY, Abel**
  **69002 Lyon (FR)**
- **JOLY, Lilian**
  **51400 Les Grandes Loges (FR)**
- **DECARPENTERIE, Thomas**
  **51100 Reims (FR)**
- **BURGALAT, Jérémie**
  **51100 Reims (FR)**
- **CHAUVIN, Nicolas**
  **51400 Mourmelon le Grand (FR)**
- **ALBORA, Grégory**
  **51150 Tours-sur-Marne (FR)**
- **DUMELIE, Nicolas**
  **51450 Betheny (FR)**
- **COUSIN, Julien**
  **51450 Betheny (FR)**

(74) Mandataire: **Lavoix**
**2, place d'Estienne d'Orves**
**75441 Paris Cedex 09 (FR)**

(56) Documents cités:
**US-A1- 2018 188 129 US-A1- 2019 301 931**

- AMIR KHAN ET AL: "Low Power Greenhouse Gas Sensors for Unmanned Aerial Vehicles", REMOTE SENSING, vol. 4, no. 5, 9 mai 2012 (2012-05-09), pages 1355-1368, XP055710421, DOI: 10.3390/rs4051355
- Lilian Joly ET AL: "The evolution of AMULSE (Atmospheric Measurements by Ultra-Light Spectrometer) and its interest in atmospheric applications. Results of the Atmospheric Profiles Of GreenhousE gasEs (APOGEE) weather balloon release campaign for satellite retrieval validation", , 25 septembre 2019 (2019-09-25), XP055752038, DOI: 10.5194/amt-2019-335 Extrait de l'Internet: URL:https://pdfs.semanticscholar.org/1b44/ 556871184948e4b1150c3e7f679ef699fe31.pdf?_ ga=2.108763845.699100834.1605722910-197311 4652.1603976055 [extrait le 2020-11-18]
- WEIPENG ZHANG ET AL: "Adaptive cavity-enhanced dual-comb spectroscopy", PHOTONICS RESEARCH, vol. 7, no. 8, 23 juillet 2019 (2019-07-23), page 883, XP055752167, DOI: 10.1364/PRJ.7.000883 -& KEVIN C. COSSEL ET AL: "Open-path dual-comb spectroscopy to an airborne retroreflector", OPTICA, vol. 4, no. 7, 20 juillet 2017 (2017-07-20), page 724, XP055752145, US ISSN: 2334-2536, DOI: 10.1364/OPTICA.4.000724 -& SEAN COBURN ET AL: "Continuous regional trace gas source attribution using a field-deployed dual frequency comb spectrometer", ARXIV.ORG, CORNELL UNIVERSITY LIBRARY, 201 OLIN LIBRARY CORNELL UNIVERSITY ITHACA, NY 14853, 21 novembre 2017 (2017-11-21), XP081301134,
- LILIAN JOLY ET AL: "Atmospheric Measurements by Ultra-Light SpEctrometer (AMULSE) Dedicated to Vertical Profile in Situ Measurements of Carbon Dioxide (CO2) Under Weather Balloons: Instrumental Development and Field Application", SENSORS, vol. 16, no. 10, 29 septembre 2016 (2016-09-29), pages 1-14, XP055710424, DOI: 10.3390/s16101609

**Description**

La présente invention concerne un drone de mesure de données représentatives de teneurs en au moins deux gaz présents dans l'atmosphère à l'écart du sol, selon le préambule de la revendication 1.

Les gaz à mesurer sont notamment des gaz à effet de serre tel que le méthane ou le dioxyde de carbone.

Les préoccupations sur la protection de l'environnement ont contribué au renforcement de la législation sur les émissions polluantes, notamment en Europe.

De ce fait, les unités industrielles, telles que celles présentes dans l'industrie pétrolière ou chimique doivent s'adapter à des contraintes environnementales de plus en plus exigeantes.

En particulier, des gaz à effet de serre sont émis lors d'opérations d'exploitation, de transport, de raffinage, et de dépôt des hydrocarbures. Ces émissions sont suivies par les exploitants et font régulièrement l'objet de mesures de réduction.

Il est en particulier nécessaire de caractériser quelles sont les sources de gaz à effet de serre et quelles sont les quantités émises par ces sources pour s'assurer de leur contrôle et reporter les progrès effectués.

Toutefois, l'identification des sources d'émission de gaz à effet de serre et la quantification des émissions diffuses et fugitives ne donnent pas entière satisfaction.

En effet, les émissions sont très difficiles à mesurer, car souvent non canalisées, et potentiellement près de bassins ou de lacs ou à des endroits inaccessibles, par exemple en hauteur ou en milieu d'unité.

Pour obtenir suffisamment de mesures, il est donc nécessaire d'effectuer un grand nombre de passages au-dessus de l'installation pour relever les teneurs en gaz.

Pour ce faire, il est connu d'utiliser des avions qui volent à basse altitude, et qui sont munis de capteurs de mesures de gaz à effet de serre. Ces avions effectuent de nombreux allers et venues en regard de l'installation pour pouvoir effectuer la mesure.

Cependant, de tels avions présentent le désavantage majeur d'émettre également des gaz à effet de serre. Leur coût d'exploitation est également très élevé et des restrictions peuvent exister quant au survol de certaines installations par des avions.

Pour pallier à ce problème, il est possible d'utiliser des drones, même si les drones ne donnent pas entière satisfaction dans le cadre de ces mesures.

En effet, les drones existants présentent par nature une autonomie assez limitée. En outre, leur charge utile est faible, ce qui limite le nombre d'équipements embarqués, en particulier pour réaliser des mesures multiples.

L'article de AMIR KHAN ET AL, "Low Power Greenhouse Gas Sensors for Unmanned Aerial Vehicles", REMOTE SENSING, (20120509), vol. 4, no. 5, pages 1355 - 1368 décrit un drone équipé de cellules de mesure spécifiques à deux gaz à mesurer.

L'article de Lilian Joly ET AL, "The évolution of AMULSE (Atmospheric Measurements by Ultra-Light Spectrometer) and its interest in atmospheric applications. Results of the Atmospheric Profiles Of GreenhousE gases (APOGEE) weather balloon release campaign for satellite retrieval validation" décrit un ballon équipé d'une cellule de mesure qui comprend deux lasers et pour chaque laser, un détecteur correspondant à la longueur d'onde émise par le laser.

L'article de WEIPENG ZHANG ET AL, "Adaptive cavity-enhanced dual-comb spectroscopy", PHOTONICS RESEARCH, (2019), vol. 7, no. 8, page 883, une première source laser qui sert à injecter de la lumière dans une cavité et une deuxième source laser, qui est utilisée à une étape de détection avant que les données ne soient envoyées à un capteur de détection.

Un but de l'invention est donc de disposer d'un drone de mesure qui présente une autonomie suffisante pour effectuer des campagnes de détection de gaz présentant des émissions diffuses et fugitives, tout en disposant de capacités de mesure suffisantes pour effectuer les analyses souhaitées.

A cet effet, l'invention a pour objet un drone selon la revendication 1.

Le drone selon l'invention peut comprendre l'une ou plusieurs des caractéristiques 2 à 14, ou l'une des caractéristiques suivantes prise(s) isolément ou suivant toute combinaison techniquement possible :

- la cavité de mesure est configurée pour réaliser de multiples réflexions des faisceaux laser injectés par la première source et par la deuxième source ;
- le composant laser de chacune de la première source laser et de la deuxième source laser est constitué d'une diode laser ;
- la cellule de mesure est configurée pour fonctionner par absorption directe de lumière laser dans la cavité de mesure, au contact des gaz dont la teneur est à mesurer.

L'invention à également pour objet un procédé de mesure de données représentatives de teneurs en au moins deux gaz présents dans l'atmosphère à l'écart du sol selon la revendication 15.

Le procédé de mesure selon l'invention peut comprendre la caractéristique suivante :

- le système de commande réalise des injections séquentielles et successives du premier faisceau laser dans la cellule de mesure, puis du deuxième faisceau laser dans la cellule de mesure, respectivement sans injection du deuxième faisceau laser dans la cellule de mesure, lorsque le premier faisceau laser est injecté dans la cellule de mesure, et sans injection du premier faisceau laser dans la cellule de mesure, lorsque le deuxième faisceau laser est injecté dans la cellule de mesure.

L'invention sera mieux comprise à la lecture de la description qui va suivre, donnée uniquement à titre d'exemple, et faite en se référant aux dessins annexés, sur lesquels :

- [Fig. 1] la figure 1 est une vue en perspective d'un premier drone selon l'invention ;
- [Fig. 2] la figure 2 est une vue de dessus du châssis du drone portant un capteur de mesure et un système de commande du capteur de mesure ;
- [Fig. 3] la figure 3 est une vue de face du capteur de mesure illustré sur la figure 2 ;
- [Fig. 4] la figure 4 est une vue de la cellule de mesure, lors de l'injection d'un premier faisceau ;
- [Fig. 5] la figure 5 est une vue analogue à la figure 4 lors de l'injection d'un deuxième faisceau ;
- [Fig. 6] la figure 6 est une vue du signal capté par le détecteur, successivement pendant l'injection du premier faisceau, puis lors de l'injection du deuxième faisceau.

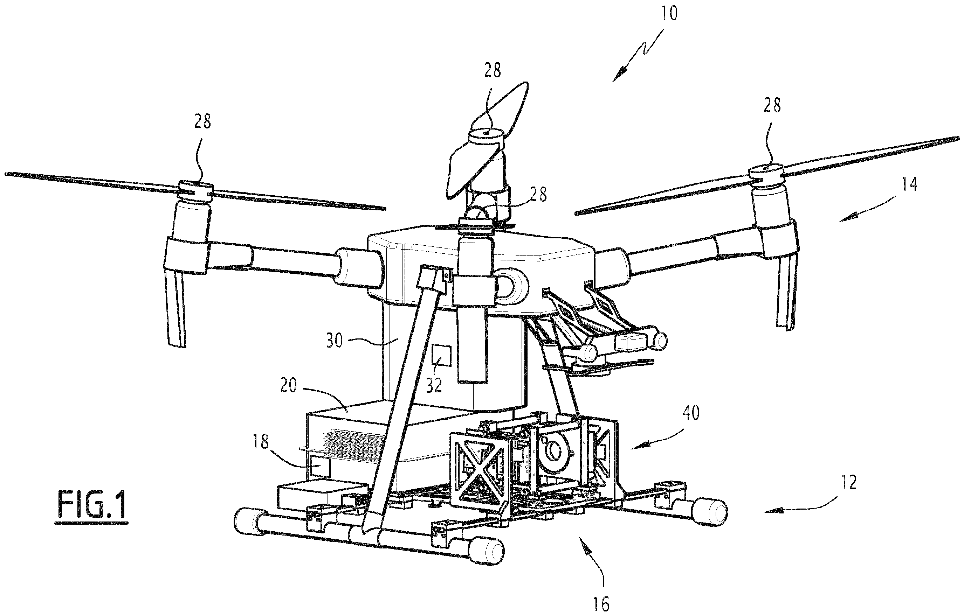

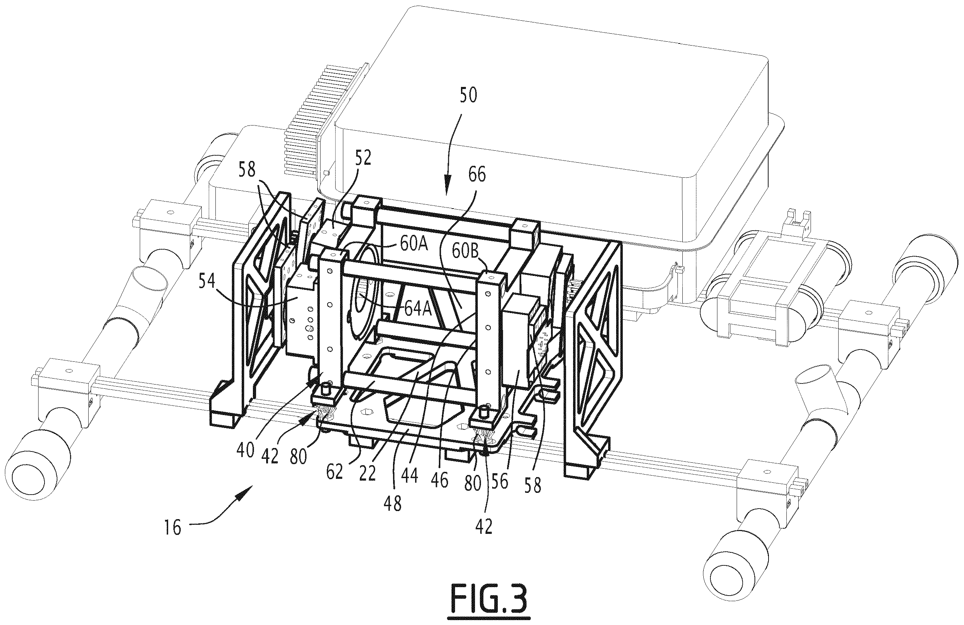

Un premier drone 10 selon l'invention est illustré sur les figures 1 à 3. Le drone 10 est destiné notamment à mesurer des données représentatives afin de pouvoir calculer les teneurs en au moins deux gaz présents dans l'atmosphère dans lequel évolue le drone 10.

Les données représentatives sont par exemple mesurées en regard d'une installation industrielle, telle qu'une installation pétrolière, en particulier une installation d'exploitation, de transport, de raffinage, de traitement ou de dépôt d'hydrocarbures.

Les gaz dont la teneur est mesurée sont de préférence le méthane et le dioxyde de carbone.

Dans des variantes, d'autres gaz sont mesurables, tel que les gaz aromatiques notamment le benzène, ou encore le butadiène, l'éthane, le monoxyde de carbone. Plus généralement la teneur mesurée est celle d'un ensemble de composés organiques volatiles (ou « COV ») pour déterminer une empreinte en ces composés.

Un gaz est mesurable du moment qu'il possède une signature spectrale définie, par exemple dans l'infrarouge (notamment pour des longueurs d'ondes comprises entre 700 nm et 2 $\mu$m) ou dans l'ultraviolet (notamment pour des longueurs d'ondes entre 10 nm et 380 nm).

Le drone 10 est destiné à se déplacer dans l'atmosphère au-dessus et autour de l'installation pour effectuer à divers points dans l'atmosphère au-dessus et autour de l'installation, des mesures de données représentatives des teneurs en au moins deux gaz.

Comme illustré sur la figure 1, le drone 10 comporte un châssis 12, un ensemble de propulsion 14, propre à permettre le décollage du châssis 12 à l'écart du sol, et son déplacement en volant dans l'atmosphère au-dessus du sol.

Le drone 10 comporte en outre un ensemble de mesure 16, un système de commande 18 de l'ensemble de mesure 16, et avantageusement, un système de télétransmission 20.

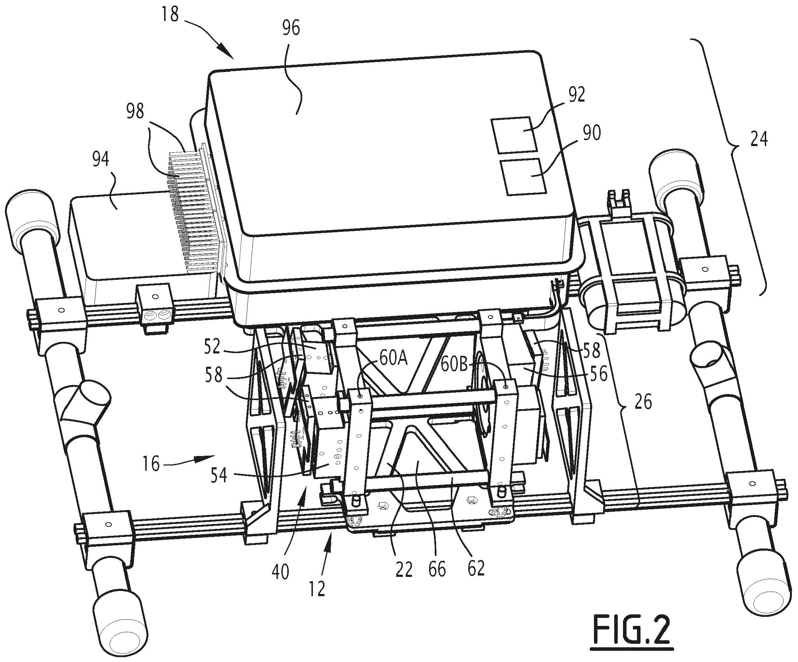

Le châssis 12 est ici formé d'une armature ajourée, formée de membrures 22. Dans l'exemple représenté sur la figure 2, l'armature est de forme rectangulaire. Elle présente des membrures 22 suivant les côtés d'un rectangle, et des membrures 22 suivant les diagonales du rectangle.

Les membrures 22 sont par exemple réalisées en polymère, pour alléger le drone 10.

Le polymère choisi est de préférence un polymère présentant sous forme solide.

Le polymère est par exemple choisi parmi les polyétheréthercétone, les poly(acrylonitrile butadiène styrène), les poly(acide polylactique), les poly(acrylonitrile styrène acrylate).

Comme illustré sur la figure 2, les membrures 22 de l'armature définissent une première région 24 de support du système de commande 18, et une deuxième région 26 de support de l'ensemble de mesure 16, déportée latéralement par rapport à la première région 24.

En référence à la figure 1, l'ensemble de propulsion 14 comporte une pluralité d'organes de propulsion 28, qui sont ici des hélices entraînées en rotation par un moteur.

L'ensemble de propulsion 14 comporte en outre une source d'énergie 30 formée ici par une batterie et un système 32 de localisation et de commande du déplacement du drone 10 dans l'atmosphère.

Dans cet exemple, le drone 10 est un drone multi rotor à voilure tournante. Il est dépourvu d'ailes, sa portance étant assurée par l'ensemble de propulsion 14.

Le drone 10 est par exemple un drone quadricoptère à voilure tournante, notamment un drone DJI M200 commercialisé par la société DJI.

L'ensemble de propulsion 14 comporte ici une pluralité d'hélices rotatives autour d'axes sensiblement verticaux. Par « sensiblement verticaux », on entend généralement que les axes de rotation des hélices sont inclinés de moins de 30° par rapport à la verticale.

Lorsque les moteurs des hélices sont alimentés électriquement par la batterie, les hélices sont entraînées en rotation autour de leur axe, entraînant un flux d'air descendant, qui est propre à balayer en partie le châssis 12 dans la première région 24 et dans la deuxième région 26.

Le système de localisation et de commande 32 comporte un capteur de position, notamment un GPS et/ou une centrale inertielle. Il comprend en outre une unité de commande, propre à piloter le déplacement du drone 10 le long d'une trajectoire préenregistrée avant le vol et chargée dans le système 32, ou de manière déportée et manuelle via une télécommande déportée.

Le drone 10 est ainsi propre à suivre automatiquement une trajectoire prédéfinie, ou alternativement, à être piloté manuellement par un opérateur.

L'ensemble de mesure 16 comporte un capteur 40 de mesure des données représentatives des teneurs en au moins deux gaz, monté sur le châssis 12 avantageusement via des amortisseurs 42. Il comprend en outre des capteurs 44, 46 de mesure de la température et de la pression et avantageusement, un capteur d'altitude 48.

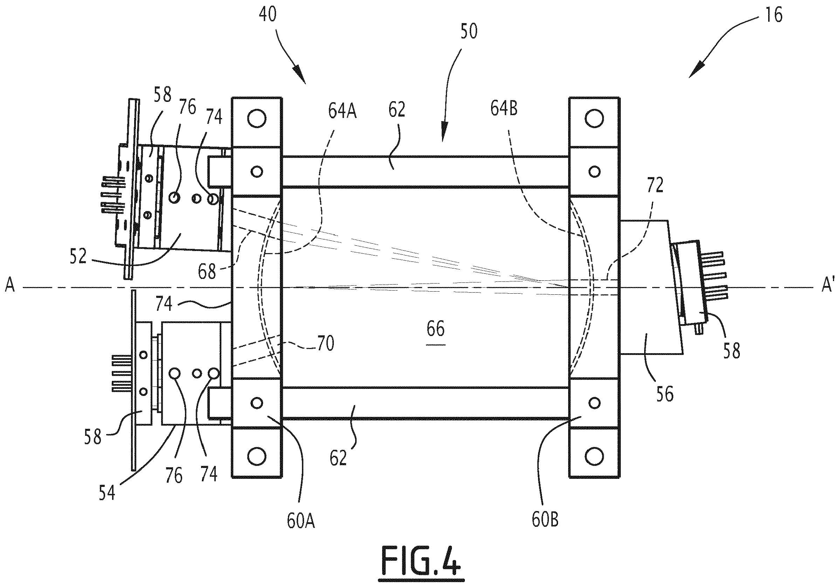

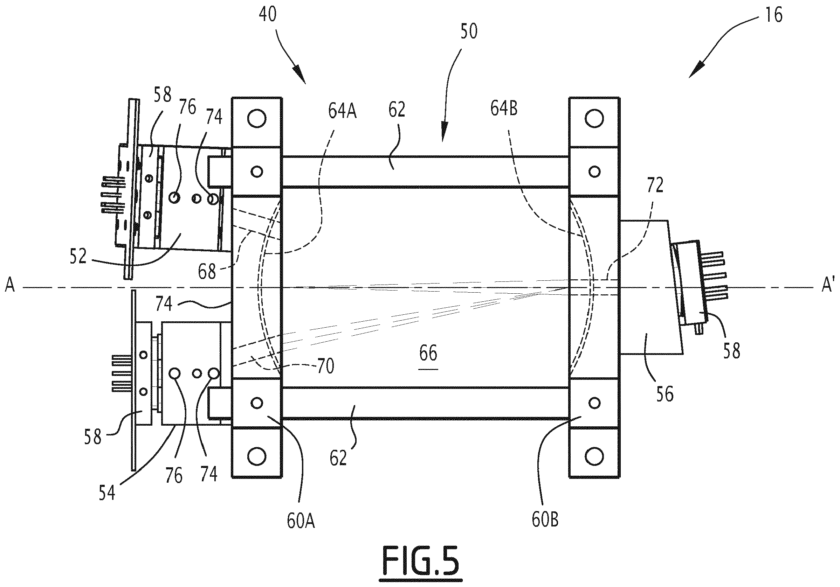

En référence aux figures 2 à 5, le capteur de mesure des données représentatives 40 comprend une cellule de mesure 50 ouverte à l'atmosphère, une première source laser 52, destinée à la détection d'un premier gaz, une deuxième source laser 54, destinée à la détection d'un deuxième gaz, et une détecteur commun 56 destiné à recevoir les signaux permettant la détection du premier gaz et du deuxième gaz, les signaux étant respectivement issus de la première source 52 et de la deuxième source 54.

Le capteur 40 comporte en outre des plaques d'échange thermique 58 montées respectivement sur chaque source 52, 54 et sur le détecteur 56.

La cellule de mesure 50 est ici une cellule unique pour la mesure dans le même volume des données représentatives des teneurs en premier gaz et en deuxième gaz.

La cellule de mesure 50 comporte deux supports 60A, 60B en regard, et des barres de liaison 62 raccordant les supports 60A, 60B. La cellule de mesure 50 comporte en outre des miroirs 64A, 64B en regard, portés respectivement par les supports 60A, 60B, les miroirs 64A, 64B délimitant entre eux une cavité de mesure 66.

Dans cet exemple, les supports 60A, 60B sont montés parallèles l'un à l'autre, perpendiculairement à un axe longitudinal A-A' de la cavité de mesure 66. L'axe A-A' est de préférence horizontal lorsque le drone 10 repose sur un support plan horizontal.

Les supports 60A, 60B présentent ici une forme prismatique et un contour extérieur polygonal, de préférence carré.

Les barres de liaison 62 fixent la distance entre les supports 60A, 60B. Dans cet exemple, les barres de liaison 62 s'étendent entre les sommets du polygone définissant le contour des supports 60A, 60B. Elles s'étendent parallèles entre elles en délimitant des espaces intermédiaires de passage.

La cavité de mesure 66 est donc ouverte dans au moins une direction, de préférence dans au moins deux directions, entre les supports 60A, 60B en regard et entre les barres de liaisons 62.

La longueur de la cavité de mesure 66, prises entre les supports 60A, 60B est par exemple inférieure à 50 cm et comprise notamment entre 5 cm et 30 cm.

La longueur de la cavité de mesure 66 est adaptée en fonction de la gamme de teneurs attendues pour le gaz à mesurer. Par exemple, la longueur de la cavité de mesure 66 est plus importante si le gaz est à l'état de traces et/ou si la réponse qu'il possède à la longueur d'onde mesurée est faible.

Au contraire, la longueur de la cavité de mesure 66 est moins importante, si le gaz à mesurer est présent avec une teneur relativement forte ou si sa réponse à la longueur d'onde mesurée est forte.

Les miroirs 64A, 64B sont montés chacun respectivement sur un support 60A, 60B pour être placés en regard l'un de l'autre. Les miroirs 64A, 64B sont concaves, avec leurs concavités en regard l'une de l'autre.

Un premier support 60A et un premier miroir 64A comprennent au moins deux trous 68, 70 pour permettre respectivement l'injection d'un premier faisceau provenant de la première source laser 52 et d'un deuxième faisceau provenant de la deuxième source laser 54.

Le deuxième miroir 64B en regard du premier miroir 64A, et le deuxième support 64B comportent un trou 72 d'extraction de signal, pour permettre au détecteur de recevoir un signal issu de la cavité de mesure 66.

La première source laser 52 et la deuxième source laser 54 sont montées sur une face du premier support 60A, à extérieur à la cavité de mesure 66, de part et d'autre de l'axe longitudinal A-A' de la cavité.

Chaque source 52, 54 comporte un composant laser 74 et un élément 76 de contrôle de la température, par exemple un élément Peltier.

Le composant laser 74 de la première source 52 est par exemple propre à émettre un premier faisceau laser centrée sur une première longueur d'onde $\lambda 1$. Le composant laser 74 de la deuxième source 54 est propre à émettre un deuxième faisceau laser centrée sur une deuxième longueur d'onde $\lambda 2$, distincte de la longueur d'onde $\lambda 1$.

Les longueurs d'ondes $\lambda 1$, $\lambda 2$ sont de préférence séparées avantageusement d'au moins 5 nm, notamment d'au moins 100 nm.

Par exemple, pour la détection du méthane, la première source 52 est propre à émettre le premier faisceau laser centré sur la longueur d'onde $\lambda 1$ comprise entre 3230 nm et 3250 nm, notamment entre 3238 nm et 3242 nm. Pour la détection du dioxyde de carbone, la deuxième source 54 est propre par exemple à émettre le deuxième faisceau laser centrée sur la longueur d'onde $\lambda 2$ comprise entre 1990 mm et 2020 mm, notamment entre 2000 nm et 2005 nm.

Plus généralement, la longueur d'onde associée à une molécule cible est choisie en fonction de la signature spectrale de chaque molécule cible et des éventuelles molécules interférentes. La sélection de la longueur d'onde dépend de l'environnement de mesure (pression, température, concentration des molécules cibles et interférentes, ...).

L'élément de contrôle 76 de la température est propre à stabiliser la température des sources 52, 54.

Dans l'exemple représenté sur les figures, les plaques d'échange thermique 58 sont montées à l'arrière de la première source laser 52 de la deuxième source laser 54 et du détecteur 56, en contact thermique avec les éléments de contrôle de température 76.

Les plaques d'échanges thermique 58 sont formées de métal, par exemple d'aluminium. Elles font saillie par rapport aux sources 52, 54, pour être balayées par le flux d'air engendré par les organes de propulsion 28 lors de la rotation des hélices.

Ainsi, les calories prélevées par l'élément de contrôle de température 76 sont évacuées à l'aide des plaques d'échanges thermique 58, sans qu'il soit nécessaire de monter un ventilateur additionnel pour contrôler la température des sources 52, 54 ou du détecteur 56. Ceci allège le drone 10.

Le détecteur 56 est commun à la première source laser 52 et à la deuxième source laser 54. Il est propre à détecter l'intensité d'un signal extrait de la cavité de mesure 66 à des longueurs d'ondes incluant la longueur d'onde $\lambda 1$ du faisceau d'émission de la première source laser 52 et la longueur d'onde $\lambda 2$ du faisceau d'émission de la deuxième source laser 54.

Ainsi, l'intensité mesurée peut être reliée à l'intensité incidente par la loi de Beer-Lambert telle que décrite plus bas

$$I = I_0 \exp(L.N.K)$$

où I est l'intensité mesurée, $I_0$ est l'intensité incidente, L est la longueur du chemin optique parcouru dans la cellule de mesure 50, N est le nombre de molécules du gaz étudié dans le parcours et K est le coefficient d'absorption de ce gaz.

L'utilisation d'un détecteur commun 56 aux deux sources laser 52, 54 réduit le nombre de composants présent dans le capteur de mesure 40, ce qui allège sensiblement le capteur 40, pour permettre l'intégration d'autres capteurs et/ou d'instruments sur le drone 10, ou sa réduction de masse.

Le détecteur commun 56 comporte un organe de détection unique sensible à la fois à la longueur d'onde $\lambda 1$ du faisceau d'émission de la première source laser 52 et à la longueur d'onde $\lambda 2$ du faisceau d'émission de la deuxième source laser 54.

Le détecteur commun 56 est formé d'un seul composant, par exemple commercialisé par la société Judson (http://www.teledynejudson.com/), Vigo (https://vigo.com.pl/en/products-vigo/) ou Hamamatsu (https://www.hamamatsu.com).

Le capteur de mesure des données représentatives 40 fonctionne avantageusement avec un seul détecteur 56 pour mesurer les intensités résultantes du signal prélevé dans la cavité de mesure 56 pour chacune des sources laser 52, 54.

Les amortisseurs 42, lorsqu'ils sont présents, comportent des fils ressorts 80 raccordant le châssis 12 à chacun des supports 60A, 60B. Ces fils ressorts 80 sont propres à absorber en partie les vibrations de l'ensemble de propulsion 14 et du mouvement dans l'air du drone 10.

Le capteur 46 de mesure de la température est disposé, entre les supports 60A, 60B en regard. Le capteur 46 est par exemple une thermistance, ou un thermocouple, propre à mesurer une résistance électrique d'un élément métallique qui varie en fonction de la température.

Le capteur 48 de mesure de pression comporte par exemple un tube de mesure de pression débouchant dans la cavité de mesure 66.

La présence d'un capteur de mesure de température 44 et d'un capteur de mesure de la pression 46 directement au sein de la cellule de mesure 50, de préférence dans la cavité de mesure 66 renforce la fiabilité des données collectées, en particulier compte tenu de la concentration faible des gaz à mesurer dans la cavité de mesure 66.

Le capteur d'altitude 48, lorsqu'il est présent, comporte un altimètre, muni par exemple d'un laser pointant vers le sol pour mesurer la hauteur à laquelle se trouve le drone 10.

Le système de commande 18 comporte une unité 90 d'alimentation électrique sélective de chacune des sources 52, 54, une unité 92 de recueil de données mesurées par le détecteur 56 et au moins un échangeur thermique 94, propre à évacuer la chaleur engendrée par les unités 90, 92 sans ventilation propre. Ces unités sont logées dans un boitier 96.

L'unité d'alimentation électrique 90 est propre à alimenter sélectivement et successivement la première source laser 52 et la deuxième source laser 54 pour obtenir une première phase d'illumination de la cavité de mesure 66 exclusivement par la première source laser 52, sans illumination par une autre source laser telle que la deuxième source laser 54, puis une seconde phase d'illumination de la cavité de mesure 66 exclusivement par la deuxième source laser 54, sans illumination par une autre source laser, en particulier par la première source laser 52.

Ainsi, des phases de mesures successives de données représentatives de la première teneur en un premier gaz, et de la deuxième teneur en un deuxième gaz, peuvent être réalisées dans la même cavité de mesure 66 de la cellule de mesure 50, ces données étant collectées sélectivement par le même détecteur 56, sans interférence entre les signaux obtenus.

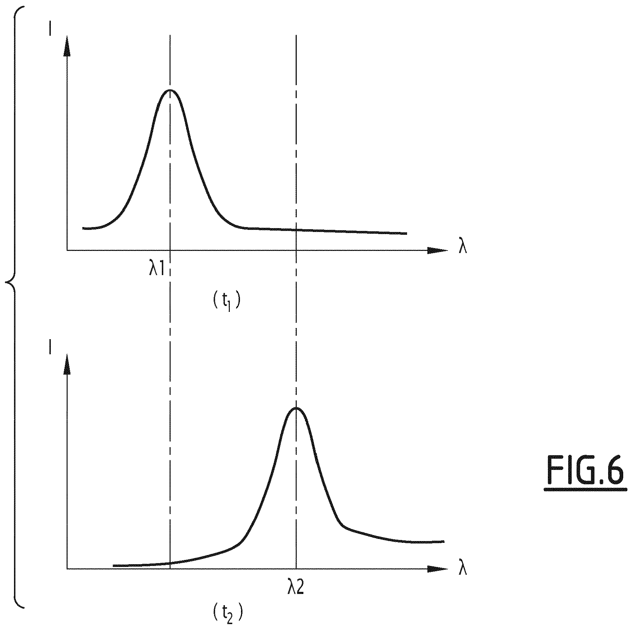

Ces données représentatives forment des spectres d'intensité lumineuse en fonction de la longueur d'onde, représentés schématiquement sur la figure 6.

L'unité d'alimentation électrique 90 est par exemple raccordée à la source d'énergie 30 de l'organe de propulsion 28, ou possède sa propre source d'énergie.

L'unité de recueil de données 92 comporte au moins une mémoire, propre à stocker les spectres d'intensité lumineuse en fonction de la longueur d'onde relevés à différents instants par le détecteur 56.

Les données sont stockées par exemple à une fréquence supérieure à 10 Hz, en particulier comprise entre 1 Hz et 100 Hz. Les spectres stockés comprennent de préférence un nombre de points supérieurs à 256, et compris par exemple entre 256 et 4096 points.

Ainsi, une très bonne résolution est obtenue pour déterminer l'intensité des pics mesurés dans la cellule de mesure 50 en fonction de la longueur d'onde, ce qui permet d'en déduire les teneurs en les deux gaz, même si ces teneurs sont très faibles.

L'unité de recueil des données 92 est raccordée au système de télétransmission 20 pour permettre l'export des données vers une station de réception au sol, lors du vol du drone, à une fréquence qui peut être inférieure à la fréquence d'acquisition, par exemple comprise entre 1 Hz et 5 Hz.

L'échangeur thermique 94 est en contact thermique avec chacune des unités d'alimentation 90 et de recueils de données 92. Il est propre à évacuer la chaleur produite par ces unités 90, 92 jusqu'à des plaques 98 faisant saillie hors du boitier 96 contenant les unités 90, 92.

Les plaques 98 sont propres à être balayées par le flux d'air engendré par les organes de propulsion 28, pour évacuer la chaleur produite par les unités 90, 92. Ainsi aucun ventilateur n'est nécessaire dans le boitier 96 pour refroidir les unités 90, 92, ce qui réduit le poids et la consommation électrique du drone 10.

Le système de télétransmission 20 comporte un émetteur, propre à transmettre des données vers une station au sol, ces données étant par exemple les données recueillies par l'unité 92 ou une fraction de ces données.

Un procédé de mesure des teneurs en au moins deux gaz présents dans l'atmosphère, de préférence en regard d'une installation industrielle, va maintenant être décrit.

Initialement, le drone 10 est mis en vol. Les organes de propulsion 28 sont activés par le système de localisation et de commande 32 pour permettre le décollage du drone 10, et son déplacement vers la zone où les mesures doivent être effectuées.

Les hélices de l'ensemble de propulsion 14 engendrent une force de portance. Le système de localisation et de commande 32 commande le déplacement du drone 10, soit sous l'effet d'une commande manuelle à distance, soit en suivant un programme automatique chargé dans le système 32.

Lors du déplacement du drone 10, des mesures sont effectuées. A cet effet, le capteur de mesure des données représentatives 40, le capteur de mesure de température 44, le capteur de mesure de pression 46 et éventuellement le capteur d'altitude 48 lorsqu'il est présent, sont activés.

Les mesures par les différents capteurs 40, 44, 46, 48 sont effectuées lors du mouvement du drone 10, sans avoir à immobiliser le drone 10. A cet effet, l'unité d'alimentation électrique 90 alimente sélectivement et successivement la première source laser 52, puis la deuxième source laser 54.

Lors de chaque phase d'activation de la première source laser 52, le composant laser 74 de la deuxième source laser 54 est désactivé. Le composant laser 74 de la première source laser 52 émet un premier faisceau laser à la longueur d'onde λ1 qui est injecté via le trou d'injection 68 dans la cavité de mesure 66.

Comme indiqué plus haut, l'épaisseur du premier faisceau laser est supérieure à 1 mm, et notamment comprise entre 3 mm et 6 mm. Ceci permet de s'affranchir d'artefacts de mesures pouvant être crées par des particules en suspension dans la cavité de mesure 66.

Le premier faisceau laser se réfléchit successivement sur les miroirs 64A, 64B en effectuant des va et vient dans la cavité de mesure 66 pour augmenter la longueur du chemin optique L.

Comme illustré par la figure 6, sur la courbe (a), un premier signal est recueilli à travers le trou de prélèvement 72 résultant du premier faisceau émis par la première source 52.

Ce premier signal est capté par le détecteur 56 et les données captées par le détecteur 56 sont envoyées à l'unité de recueil de données 92 pour être stockées.

Puis, dans chaque phase d'activation de la deuxième source laser 54, le composant laser 74 de la première source 52 est désactivé. Le composant laser 74 de la deuxième source 54 émet un deuxième faisceau laser à la longueur d'onde λ2 distincte de la longueur d'onde λ1. Ce faisceau laser est introduit via le trou d'injection 70 dans la cavité de mesure 66.

Comme précédemment, l'épaisseur du deuxième faisceau laser est supérieure à 1 mm, et notamment comprise entre 3 mm et 6 mm.

Le deuxième faisceau laser se réfléchit successivement sur les miroirs 64A, 64B en effectuant des va et vient dans la cavité de mesure 66 pour augmenter la longueur du chemin optique L.

Comme illustré par la figure 6, sur la courbe (b), un deuxième signal est recueilli à travers le trou de prélèvement 72 résultant du deuxième faisceau ainsi émis par la deuxième source 54.

Ce deuxième signal est capté par le même détecteur 56 qui a capté le premier signal et les données captées par le détecteur 56 sont envoyées à l'unité de recueil de données 92 pour être stockées.

Les mesures étant effectuées successivement dans la première phase et dans la deuxième phase permettent de déterminer, à l'aide du même détecteur 56, des intensités lumineuses à deux longueurs d'ondes λ1, λ2, représentatives respectivement de la teneur en un premier gaz et de la teneur en un deuxième gaz.

Lorsque le drone 10 a fini sa mission et revient au sol, les spectres relevés par le détecteur 56 et stockés dans la mémoire de l'unité de recueil de données 92, sont transmis par le système de télétransmission 20 vers une station de contrôle.

Dans la station de contrôle, ces spectres sont stockés en association avec des données de position géographique du drone 10 mesurées par le système de localisation et de commande 32, avec la température et la pression mesurées par les capteurs 44, 46, éventuellement avec l'altitude mesurée par le capteur d'altitude 48 et avec le temps auquel la mesure a été effectuée.

Le drone 10 selon l'invention est donc particulièrement compact et léger. Il permet néanmoins d'obtenir des données précises et fiables, permettant de déduire au moins deux teneurs en deux gaz présents dans l'atmosphère, dans des environnements difficiles, par exemple au voisinage d'installations industrielles, grâce à la présence d'un détecteur unique 56 associé à au moins deux sources laser 52, 54 différentes.

Il est ainsi possible de mesurer dans la même cellule de mesure 50, quasi simultanément, des données représentatives des teneurs en chacun des deux gaz, de manière sélective et pratique.

Dans une variante, le drone 10 comporte une unité 100 de calcul embarquée sur le châssis 12. L'unité de calcul 100 est propre à traiter les données collectées par le détecteur 56 à chaque instant, en particuliers les spectres d'intensité lumineuses mesurés à chaque instant, pour calculer des teneurs en au moins deux gaz à différents instants, à partir des données représentatives colletées par le détecteur 56 et à partir d'une calibration préalable.

Le système de télétransmission de données 20 est alors propre à télétransmettre les valeurs de teneur calculées par l'unité de calcul 100, en remplacement des spectres de données d'intensité lumineuses, ce qui allège la transmission de données en temps réel et permet d'obtenir plus de mesures de teneurs en les deux gaz en temps réel.

Dans une autre variante, le drone 10 comporte plusieurs cellules de mesures 50, de structure analogue à la cellule de mesure 50 décrite plus haut, chacune étant dédiée à la détection d'au moins deux gaz distincts.

Dans l'exemple qui vient d'être décrit, chaque composant laser de la première source laser 52 et la deuxième source laser 54 est par exemple une diode laser. Une diode laser est un composant opto-électronique réalisé à base de matériaux semi-conducteurs. Elle émet de la lumière monochromatique cohérente.

Elle est par exemple formée d'une jonction de semi-conducteurs, qui possède trois zones caractéristiques : une couche de confinement de type n, une zone active et une couche de confinement de type p. La diode est par exemple une diode à réaction distribuée (« distributed feed back » en anglais).

Comme indiqué plus haut, la cellule de mesure 50 fonctionne par absorption directe de lumière laser dans la cavité de mesure 66, au contact des gaz dont la teneur est à mesurer. Il s'agit donc d'une cellule de mesure 50 pour réaliser une spectroscopie d'absorption directe au laser (Direct Laser Absorption Spectrometry en anglais).

La cavité de mesure 66 permet de réaliser de multiples réflexions des faisceaux laser injectés depuis la première source 52 ou depuis la deuxième source 54 pour augmenter la longueur du chemin optique. La cellule de mesure est ainsi une cellule spectroscopique à passage multiples, ou cellule de Herriott.

## Revendications

1. Drone (10) de mesure de données représentatives de teneurs en au moins deux gaz présents dans l'atmosphère à l'écart du sol, comportant :

   - un châssis (12) ;
   - au moins un organe de propulsion (28), propre à permettre le déplacement du châssis (12) dans l'atmosphère, à l'écart du sol ;
   - au moins un capteur (40) de mesure des données représentatives, porté par le châssis (12) ;
   - un système (18) de commande du capteur de mesure des données représentatives (40), porté par le châssis (12), dans lequel le capteur de mesure des données représentatives (40) est propre à mesurer des données représentatives de teneurs en au moins deux gaz présents dans l'atmosphère, le capteur de mesure des données représentatives (40) comportant au moins une cellule de mesure (50) ouverte dans l'atmosphère, et pour la ou pour chaque cellule de mesure (50), au moins une première source laser (52) propre à injecter dans la cellule de mesure (50), un premier faisceau laser à une première longueur d'onde caractéristique d'un premier gaz à détecter et une deuxième source laser (54) propre à injecter dans la cellule de mesure (50) un deuxième faisceau laser à une deuxième longueur d'onde caractéristique d'un deuxième gaz à détecter, le capteur de mesure des données représentatives (40) comportant un détecteur (56) commun aux deux sources laser (52, 54), propre à capter un premier signal de mesure provenant de la cellule de mesure (50) et résultant de l'injection du premier faisceau laser dans la cellule de mesure (50) et un deuxième signal de mesure provenant de la cellule de mesure (50) et résultant de l'injection du deuxième faisceau laser dans la cellule de mesure (50).

2. Drone (10) selon la revendication 1, dans lequel le système de commande (18) est propre à réaliser des injections séquentielles et successives du premier faisceau laser dans la cellule de mesure (50), puis du deuxième faisceau laser dans la cellule de mesure (50), respectivement sans injection du deuxième faisceau laser dans la cellule de mesure (50), lorsque le premier faisceau laser est injecté dans la cellule de mesure (50), et sans injection du premier faisceau laser dans la cellule de mesure (50), lorsque le deuxième faisceau laser est injecté dans la cellule de mesure (50), dans lequel optionnellement, le système de commande (18) est propre à activer sélectivement et séquentiellement la première source laser (52) et la deuxième source laser (54) pour réaliser les injections séquentielles et successives.

3. Drone (10) selon l'une quelconque des revendications précédentes, dans lequel la cellule de mesure (50) comporte deux miroirs (64A, 64B) situés en regard et à l'écart l'un de l'autre et délimitant entre eux une cavité de mesure (66), et deux supports (60) portant respectivement les deux miroirs (64A, 64B), les sources lasers (52, 54) et le détecteur (56) étant assemblés sur les supports (60), à l'écart de la cavité de mesure (66).

4. Drone (10) selon l'une quelconque des revendications précédentes, dans lequel la première source laser (52) et la deuxième source laser (54) sont propres à injecter dans la cavité de mesure (66) un faisceau laser de largeur supérieure à 1 mm, et notamment compris entre 3 mm et 6 mm.

5. Drone (10) selon l'une quelconque des revendications précédentes, dans lequel au moins un élément parmi la première source laser (52), la deuxième source laser (54), et le détecteur (56) est équipé d'une plaque (58) métallique d'échange thermique balayée par un flux d'air engendré par l'organe de propulsion (28) lorsque l'organe de propulsion (28) est activé

6. Drone (10) selon l'une quelconque des revendications précédentes, dans lequel le système de commande (18) comporte un boitier (96) et au moins un échangeur thermique (94) comportant au moins une plaque métallique d'échange thermique, de préférence un faisceau de plaques métalliques, la ou chaque plaque métallique d'échange thermique faisant saillie hors du boitier (96) et étant balayée par un flux d'air engendré par l'organe de propulsion (28) lorsque l'organe de propulsion (28) est activé.

7. Drone (10) selon l'une quelconque des revendications précédentes, comportant un capteur de mesure de température (44) et un capteur de mesure de pression (46) disposés dans la cellule de mesure (50).

8. Drone (10) selon l'une quelconque des revendications précédentes, comportant un capteur de mesure d'altitude (48), porté par le châssis (12).

9. Drone (10) selon l'une quelconque des revendications précédentes, dans lequel le châssis (12) comporte une pluralité de membrures (22) formant une armature ajourée, une première région (24) du châssis (12) supportant le système de commande (18), une deuxième région du châssis (12) déportée de la première région du châssis (12) supportant la cellule de mesure (50), les membrures (22) étant avantageusement réalisées en polymère, notamment en polyétheréthercétone.

10. Drone (10) selon l'une quelconque des revendications précédentes, comportant des amortisseurs (42) montés entre le châssis (12) et la cellule de mesure (50), les amortisseurs (42) étant notamment formés de fil ressort.

11. Drone (10) selon l'une quelconque des revendications précédentes, supportant un système de télétransmission de données (20) porté par le châssis (12), les données représentatives captées par le détecteur (56) étant propre à être télétransmises par le système de télétransmission (20), le drone comportant optionnellement une mémoire de stockage de données représentatives collectées par le détecteur (56), et une unité (100) de calcul embarqué sur le châssis (12) propre à traiter les données représentatives collectées par le détecteur (56) à chaque instant, pour calculer des teneurs en au moins deux gaz à différents instants, le système de transmission de données étant propre à télétransmettre les valeurs de teneur calculées par l'unité de calcul (100).

12. Drone (10) selon l'une quelconque des revendications précédentes, présentant une masse totale inférieure à 10 kg, notamment inférieure à 8 kg.

13. Drone (10) selon l'une quelconque des revendications précédentes, dans lequel le détecteur commun (56) comporte un organe de détection unique sensible à la fois à la longueur d'onde du faisceau d'émission de la première source laser (52) et à la longueur d'onde du faisceau d'émission de la deuxième source laser (54), le détecteur commun (56) étant formé d'un seul composant.

14. Drone (10) selon l'une quelconque des revendications précédentes, dans lequel la cellule de mesure (50) est une cellule de spectroscopie d'absorption directe au laser.

15. Procédé de mesure de données représentatives de teneurs en au moins deux gaz présents dans l'atmosphère à l'écart du sol, comportant :

    - vol d'un drone (10) selon l'une quelconque des revendications précédentes dans l'atmosphère à l'écart du sol ;
    - injection par la première source laser (52) dans la cellule de mesure (50) d'un premier faisceau laser à une première longueur d'onde représentative d'un premier gaz ;
    - détection par le détecteur (56) commun aux deux sources laser (52, 54) d'un premier signal mesuré provenant de la cellule de mesure (50), résultant du premier faisceau laser injecté dans la cellule de mesure (50);
    - injection par la deuxième source laser (54) dans la cellule de mesure (50) d'un deuxième faisceau laser à une deuxième longueur d'onde représentative d'un deuxième gaz à détecter ;
- détection, par le détecteur (56) commun aux deux sources laser (52, 54) d'un deuxième signal mesuré dans la cellule de mesure (50) résultant du deuxième faisceau laser injecté dans la cellule de mesure (50).

**Patentansprüche**

1. Drohne (10) zur Messung von Daten, die für den Gehalt an mindestens zwei Gasen repräsentativ sind, die in der Atmosphäre abseits des Bodens vorhanden sind, aufweisend:

   - ein Gestell (12);
   - mindestens ein Antriebsorgan (28), das geeignet ist, die Bewegung des Gestells (12) in der Atmosphäre abseits des Bodens zu gestatten;
   - mindestens einen Sensor (40) zur Messung der repräsentativen Daten, der von dem Gestell (12) getragen wird;
   - ein System (18) zur Steuerung des Sensors zur Messung der repräsentativen Daten (40), das von dem Gestell (12) getragen wird, wobei der Sensor zur Messung der repräsentativen Daten (40) geeignet ist, Daten zu messen, die für Gehalte an mindestens zwei in der Atmosphäre vorhandenen Gasen repräsentativ sind, wobei der Sensor zur Messung der repräsentativen Daten (40) mindestens eine in der Atmosphäre offene Messzelle (50) umfasst, und für die oder jede Messzelle (50), mindestens eine erste Laserquelle (52), die geeignet ist, in die Messzelle (50) einen ersten Laserstrahl mit einer ersten Wellenlänge, die für ein erstes zu detektierendes Gas charakteristisch ist, zu injizieren, und eine zweite Laserquelle (54), die geeignet ist, in die Messzelle (50) einen zweiten Laserstrahl mit einer zweiten Wellenlänge, die für ein zweites zu detektierendes Gas charakteristisch ist, zu injizieren, wobei der Sensor zur Messung der repräsentativen Daten (40) einen Detektor (56) umfasst, der den beiden Laserquellen (52, 54) gemeinsam ist, der geeignet ist, ein erstes Messsignal, das von der Messzelle (50) stammt und sich aus der Injektion des ersten Laserstrahls in die Messzelle (50) ergibt, und ein zweites Messsignal, das von der Messzelle (50) stammt und sich aus der Injektion des zweiten Laserstrahls in die Messzelle (50) ergibt, zu erfassen.

2. Drohne (10) nach Anspruch 1, wobei das Steuersystem (18) geeignet ist, sequentielle und aufeinanderfolgende Injektionen des ersten Laserstrahls in die Messzelle (50), dann des zweiten Laserstrahls in die Messzelle (50) beziehungsweise ohne Injektion des zweiten Laserstrahls in die Messzelle (50) durchzuführen, wenn der erste Laserstrahl in die Messzelle (50) injiziert wird, und ohne Injektion des ersten Laserstrahls in die Messzelle (50), wenn der zweite Laserstrahl in die Messzelle (50) injiziert wird, wobei optional das Steuersystem (18) geeignet ist, die erste Laserquelle (52) und die zweite Laserquelle (54) selektiv und sequentiell zu aktivieren, um die sequentiellen und aufeinanderfolgenden Injektionen durchzuführen.

3. Drohne (10) nach einem der vorhergehenden Ansprüche, wobei die Messzelle (50) zwei Spiegel (64A, 64B), die sich gegenüberliegen und voneinander beabstandet sind und zwischen sich einen Messhohlraum (66) begrenzen, und zwei Träger (60) umfasst, die jeweils die beiden Spiegel (64A, 64B) tragen, wobei die Laserquellen (52, 54) und der Detektor (56) auf den Trägern (60) im Abstand vom Messhohlraum (66) zusammengebaut sind.

4. Drohne (10) nach einem der vorhergehenden Ansprüche, wobei die erste Laserquelle (52) und die zweite Laserquelle (54) geeignet sind, einen Laserstrahl mit einer Breite von mehr als 1 mm, insbesondere zwischen 3 mm und 6 mm, in den Messhohlraum (66) zu injizieren.

5. Drohne (10) nach einem der vorhergehenden Ansprüche, wobei mindestens eins der Elemente von der ersten Laserquelle (52), der zweiten Laserquelle (54) und dem Detektor (56) mit einer metallischen Wärmetauscherplatte (58) ausgestattet ist, die von einem Luftstrom überstrichen wird, der von dem Antriebsorgan (28) erzeugt wird, wenn das Antriebsorgan (28) aktiviert ist

6. Drohne (10) nach einem der vorhergehenden Ansprüche, wobei das Steuersystem (18) ein Gehäuse (96) und mindestens einen Wärmetauscher (94) mit mindestens einer metallischen Wärmetauscherplatte, vorzugsweise einem Bündel von Metallplatten, aufweist, wobei die oder jede metallische Wärmetauscherplatte aus dem Gehäuse (96) herausragt und von einem Luftstrom überstrichen wird, der von dem Antriebsorgan (28) erzeugt wird, wenn das Antriebsorgan (28) aktiviert ist.

7. Drohne (10) nach einem der vorhergehenden Ansprüche, die einen Temperaturmesssensor (44) und einem Druckmesssensor (46) aufweist, die in der Messzelle (50) angeordnet sind.

8. Drohne (10) nach einem der vorhergehenden Ansprüche, die einen Sensor zur Höhenmessung (48) aufweist, der von dem Gestell (12) getragen wird.

**9.** Drohne (10) nach einem der vorhergehenden Ansprüche, wobei das Gestell (12) eine Vielzahl von Stegen (22) aufweist, die ein durchbrochenes Gerüst bilden, wobei ein erster Bereich (24) des Gestells (12) das Steuersystem (18) trägt, ein zweiter Bereich des Gestells (12), der von dem ersten Bereich des Gestells (12) versetzt ist, die Messzelle (50) trägt, wobei die Stege (22) in vorteilhafter Weise aus Polymer, insbesondere aus Polyetheretherketon, hergestellt sind.

**10.** Drohne (10) nach einem der vorhergehenden Ansprüche, die Dämpfer (42) aufweist, die zwischen dem Gestell (12) und der Messzelle (50) angebracht sind, wobei die Dämpfer (42) insbesondere aus Federdraht gebildet sind.

**11.** Drohne (10) nach einem der vorhergehenden Ansprüche, die ein von dem Gestell (12) getragenes Datenfernübertragungssystem (20) trägt, wobei die von dem Detektor (56) erfassten repräsentativen Daten geeignet sind, von dem Fernübertragungssystem (20) fernübertragen zu werden, wobei die Drohne optional einen Speicher zur Speicherung der von dem Detektor (56) gesammelten repräsentativen Daten umfasst, und eine an Bord des Gestell (12) befindliche Recheneinheit (100), die geeignet ist, die von dem Detektor (56) gesammelten repräsentativen Daten zu jedem Zeitpunkt zu verarbeiten, um die Gehalte an mindestens zwei Gasen zu verschiedenen Zeitpunkten zu berechnen, wobei das Datenübertragungssystem geeignet ist, die von der Recheneinheit (100) berechneten Gehaltswerte fernzuübertragen.

**12.** Drohne (10) nach einem der vorhergehenden Ansprüche mit einer Gesamtmasse von weniger als 10 kg, insbesondere weniger als 8 kg.

**13.** Drohne (10) nach einem der vorhergehenden Ansprüche, wobei der gemeinsame Detektor (56) ein einziges Detektionselement aufweist, das sowohl auf die Wellenlänge des Sendestrahls der ersten Laserquelle (52) als auch auf die Wellenlänge des Sendestrahls der zweiten Laserquelle (54) reagiert, wobei der gemeinsame Detektor (56) aus einem einzigen Bauteil gebildet ist.

**14.** Drohne (10) nach einem der vorhergehenden Ansprüche, wobei die Messzelle (50) eine Zelle für direkte Laserabsorptionsspektroskopie ist.

**15.** Verfahren zur Messung von Daten, die für den Gehalt an mindestens zwei Gasen in der Atmosphäre abseits des Bodens repräsentativ sind, aufweisend:

- Flug einer Drohne (10) nach einem der vorhergehenden Ansprüche in der Atmosphäre abseits des Bodens;
- Injizieren eines ersten Laserstrahls mit einer ersten Wellenlänge, die für ein erstes Gas repräsentativ ist, durch die erste Laserquelle (52) in die Messzelle (50);
- Erfassen durch den Detektor (56), der den beiden Laserquellen (52, 54) gemeinsam ist, eines ersten gemessenen Signals aus der Messzelle (50), das aus dem ersten Laserstrahl resultiert, der in die Messzelle (50) injiziert wurde;
- Injizieren eines zweiten Laserstrahls mit einer zweiten Wellenlänge, die für ein zweites zu detektierendes Gas repräsentativ ist, durch die zweite Laserquelle (54) in die Messzelle (50);
- Erfassen durch den Detektor (56), der den beiden Laserquellen (52, 54) gemeinsam ist, eines zweiten gemessenen Signals in der Messzelle (50), das aus dem zweiten Laserstrahl resultiert, der in die Messzelle (50) injiziert wurde.

**Claims**

**1.** Drone (10) for measuring data representative of amounts of at least two gases present in the atmosphere away from the ground, comprising:

- a chassis (12);
- at least one propelling device (28) able to allow the chassis (12) to move through the atmosphere, away from the ground;
- at least one sensor (40) for measuring the representative data, said at least one sensor being borne by the chassis (12);
- a control system (18) for controlling the sensor (40) for measuring the representative data, said control system being borne by the chassis (12), wherein the sensor (40) for measuring the representative data is able to measure data representative of amounts of at least two gases present in the atmosphere, the sensor (40) for measuring the representative data comprising at least one measurement cell (50) that is open to the atmosphere, and, for the or for each measurement cell (50), at least a first laser source (52) able to inject, into the measurement cell (50), a first laser beam at a first wavelength characteristic of a first gas to be detected and a second laser source (54) able to inject, into the measurement cell (50), a second laser beam at a second wavelength characteristic of a second gas to be detected, the sensor (40) for measuring the representative data comprising a detector (56) common to the two laser sources (52, 54), said detector being able to detect a first measurement signal originating from the measurement cell (50) and resulting from injection of the first laser beam into the measurement cell (50) and a second measurement signal originating from the measurement cell (50) and resulting from injection of the second laser beam into the measurement cell (50).

2. Drone (10) according to Claim 1, wherein the control system (18) is able to implement sequential and successive injections of the first laser beam into the measurement cell (50), then of the second laser beam into the measurement cell (50), without injection of the second laser beam into the measurement cell (50), when the first laser beam is injected into the measurement cell (50), and without injection of the first laser beam into the measurement cell (50), when the second laser beam is injected into the measurement cell (50), respectively, wherein optionally, the control system (18) is able to selectively and sequentially activate the first laser source (52) and the second laser source (54) to implement the sequential and successive injections.

3. Drone (10) according to any one of the preceding claims, wherein the measurement cell (50) comprises two mirrors (64A, 64B) located facing and away from each other and defining there between a measurement cavity (66), and two holders (60) bearing the two mirrors (64A, 64B), respectively, the laser sources (52, 54) and the detector (56) being joined to be holders (60), away from the measurement cavity (66).

4. Drone (10) according to any one of the preceding claims, wherein the first laser source (52) and the second laser source (54) are able to inject, into the measurement cavity (66), a laser beam of width larger than 1 mm, and especially comprised between 3 mm and 6 mm.

5. Drone (10) according to any one of the preceding claims, wherein at least one element among the first laser source (52), the second laser source (54) and the detector (56) is equipped with a metal heat-exchange plate (58) that is swept by an airflow generated by the propelling device (28) when the propelling device (28) is activated.

6. Drone (10) according to any one of the preceding claims, wherein the control system (18) comprises a casing (96) and at least one heat exchanger (94) comprising at least one metal heat-exchange plate, and preferably a series of metal plates, the or each metal heat-exchange plate protruding from the casing (96) and being swept by an airflow generated by the propelling device (28) when the propelling device (28) is activated.

7. Drone (10) according to any one of the preceding claims, comprising a temperature-measuring sensor (44) and pressure-measuring sensor (46) placed in the measuring cell (50).

8. Drone (10) according to any one of the preceding claims, comprising an altitude-measuring sensor (48) borne by the chassis (12).

9. Drone (10) according to any one of the preceding claims, wherein the chassis (12) comprises a plurality of members (22) forming an apertured framework, a first region (24) of the chassis (12) holding the control system (18), and a second region of the chassis (12), which second region is located away from the first region of the chassis (12), holding the measurement cell (50), the members (22) advantageously being made of polymer, and especially of polyetheretherketone.

10. Drone (10) according to any one of the preceding claims, comprising dampers (42) mounted between the chassis (12) and the measurement cell (50), the dampers (42) especially being formed from spring wire.

11. Drone (10) according to any one of the preceding claims, holding a system (20) for transmitting data, said system being borne by the chassis (12), the representative data detected by the detector (56) being able to be transmitted by the transmitting system (20), the drone (10) optionally comprising a memory for storing representative data collected by the detector (56), and an on-board computing unit (100) located in the chassis (12) and able to process the representative data collected by the detector (56) at any given time, with a view to computing amounts of at least two gases at various times, the data-transmitting system being able to transmit the amount values computed by the computing unit (100).

12. Drone (10) according to any one of the preceding claims, having a total mass lower than 10 kg, and especially lower than 8 kg.

13. Drone (10) according to any one of the preceding claims, wherein the common detector (56) comprises a single detecting device sensitive both to the wavelength of the beam emitted by the first laser source (52) and to the wavelength of the beam emitted by the second laser source (54), the common detector (56) being formed of a single component.

14. Drone (10) according to any one of the preceding claims, wherein the measurement cell (50) is a direct-laser-absorption-spectroscopy cell.

15. Method (10) for measuring data representative of amounts of at least two gases present in the atmosphere away from the ground, comprising:

- flying a drone (10) according to any one of the preceding claims through the atmosphere away from the ground;
- injecting, using the first laser source (52), into the measurement cell (50), a first laser beam at a first wavelength representative of a first gas;
- detecting, using the detector (56) common to the two laser sources (52, 54), a first measurement signal originating from the measurement cell (50) and resulting from the first laser beam injected into the measurement cell (50);
- injecting, using the second laser source (54), into the measurement cell (50), a second laser beam at a second wavelength representative of a second gas to be detected;
- detecting, using the detector (56) common to the two laser sources (52, 54), a second signal measured in the measurement cell (50) and resulting from the second laser beam injected into the measurement cell (50).

FIG.1

FIG.2

FIG.3

FIG.4

**FIG.5**

EP 4 127 683 B1

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **AMIR KHAN et al.** Low Power Greenhouse Gas Sensors for Unmanned Aerial Vehicles. *REMOTE SENSING,* 09 Mai 2012, vol. 4 (5), 1355-1368
- **LILIAN JOLY et al.** *The évolution of AMULSE (Atmospheric Measurements by Ultra-Light Spectrometer) and its interest in atmospheric applications. Results of the Atmospheric Profiles Of GreenhousE gases (APOGEE) weather balloon release campaign for satellite retrieval validation*
- **WEIPENG ZHANG et al.** Adaptive cavity-enhanced dual-comb spectroscopy. *PHOTONICS RESEARCH,* 2019, vol. 7 (8), 883